(19) Europäisches Patentamt

European Patent Office

Office européen des brevets

(11) **EP 1 517 161 A1**

(12) **DEMANDE DE BREVET EUROPEEN**

(43) Date de publication:
**23.03.2005 Bulletin 2005/12**

(51) Int Cl.⁷: **G02B 5/20**, G02B 26/08,
G02B 6/26, G02F 1/01,
G02F 1/1333

(21) Numéro de dépôt: **04364060.6**

(22) Date de dépôt: **16.09.2004**

(84) Etats contractants désignés:
**AT BE BG CH CY CZ DE DK EE ES FI FR GB GR
HU IE IT LI LU MC NL PL PT RO SE SI SK TR**
Etats d'extension désignés:
**AL HR LT LV MK**

(30) Priorité: **22.09.2003 FR 0311100**

(71) Demandeur: **Optogone**
**29280 Plouzané (FR)**

(72) Inventeurs:
• **Afonso, Alexandre**
**29200 Brest (FR)**
• **De Bougrenet de la Tocnaye, Jean-Louis**
**29820 Guilers (FR)**

(74) Mandataire: **Vidon, Patrice**
**Cabinet Vidon**
**16 B, rue Jouanet - B.P. 90333**
**Technopole Atalante**
**35703 Rennes Cedex 7 (FR)**

(54) **Filtre spatial de phase pour faiseau optique système et procédé correspondant**

(57) L'invention concerne un filtre spatial de phase apte à recevoir un faisceau optique incident pour le transmettre vers une fibre de sortie monomode comprenant un profil de phase spatialement variable et étant adapté à exciter les modes évanescents de la fibre de sortie. Le profil présente :

- un motif modulable avec une distribution de phase correspondant sensiblement à une combinaison d'au moins un quantile de loi normale sur au moins une dimension (301) ;et
- un support de zone déphasante (320) borné vis-à-vis du faisceau incident suivant la ou les dimensions.

L'invention concerne également un système mettant en oeuvre plusieurs filtres et un procédé de calcul du filtre.

Fig. 3b

**Description**

**1. Domaine de l'invention**

La présente invention se rapporte au domaine des atténuateurs optiques notamment variables sous forme individuelle, de barrettes ou de matrices dans la perspective, entre autres, de la réalisation de bloqueurs sélecteurs variables de longueurs d'onde pour réseaux optiques WDM.

**2. Description de l'art antérieur.**

La particularité de ce type de fonction est de requérir des atténuations importantes (généralement supérieures à 35dB) et d'opérer sur des bandes passantes de largeurs typiques comprises entre 50GHz et 100GHz. Différentes techniques sont utilisées pour atteindre cet objectif.

L'une d'entre elles consiste à générer, au moyen d'un filtre spatial, des perturbations du faisceau optique avant son injection dans une fibre monomode, de façon à exciter les modes d'ordres supérieurs, qui seront ainsi rapidement atténués. Compte tenu qu'il est souhaitable d'optimiser les pertes d'insertion, on a recours de préférence aux filtres de phase pure (généralement binaires pour des raisons de simplicité de réalisation).

Cette idée a été notamment divulguée dans les articles «Excitation and scattering of modes on a dielectric or optical fibre» (ou "excitation et diffusion de modes sur un diélectrique ou une fibre optique" en français) , de Snyder (publié dans le magazine IEEE Trans. on Microwave Theory Vol. MIT 17, N°12, 1969) et «Transfer function of long spliced graded index fibers with mode scramblers» (ou "Fonction de transfert de longues fibres à index gradué avec brouilleurs de mode" en français), de M. Ikeda and K. Kitayama, (publié dans la revue Applied Optics, Vol. 17, pp. 63-67 en 1978). Ces articles décrivent des techniques basées sur l'introduction d'un élément absorbant, diffusant ou diffractant dans un guide pour exciter des modes supérieurs. Néanmoins, ces techniques de l'art antérieur présentent l'inconvénient de ne pas permettre une adaptation des paramètres par programmation.

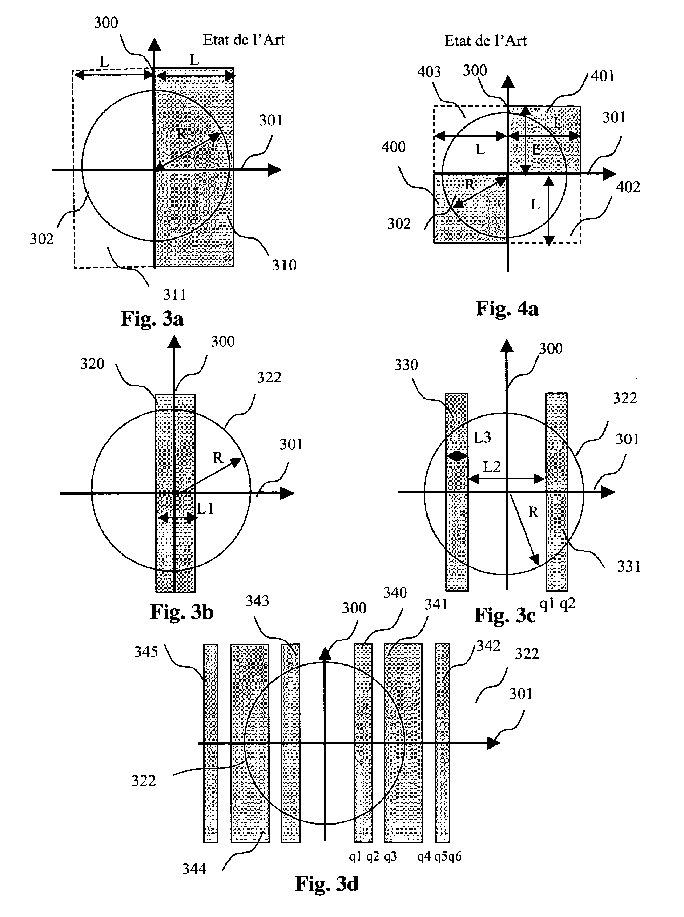

La demande de brevet internationale WO 02/071133 de la société Xtellus (marque déposée) présente un atténuateur pour fibre optique selon différents modes de réalisation relativement simple à mettre en oeuvre. Selon une technique illustrée dans cette demande de brevet, un faisceau optique incident traverse une zone à cristal liquide commandé électriquement. Les électrodes sont mises en oeuvre de sorte à définir des pixels dans une section transversale de cette zone. Ainsi, selon un premier mode de réalisation illustré en regard de la **figure 3a,** le profil à une dimension d'une section marquée par un axe horizontal 301 et un axe vertical 300 divisant respectivement la section en deux parties de largeurs égales $L$ comprend deux pixels 310 et 311, le pixel 310 étant piloté par des électrodes. La largeur L est supérieure au rayon R du faisceau incident (représenté par son col dans le cas d'un faisceau gaussien), symbolisé par son empreinte 302. Ainsi, en appliquant une tension prédéterminée à ces dernières, il est possible de commander le pixel 310 pour le déphaser vis-à-vis du pixel 311 avec un déphasage :

- nul, le signal incident n'étant, alors, pas atténué ; ou
- égal à π, le signal incident étant transformé dans un mode élevé empêchant le signal de pénétrer dans une fibre à simple mode et entraînant ainsi une atténuation variable en fonction de la tension appliquée.

En résumé, la commande appliquée aux électrodes permet de transformer ou non le signal incident dans un mode élevé ne pouvant se propager dans une fibre de sortie et donc de l'atténuer ou non.

Selon une variante de réalisation présentée dans la demande de brevet WO 02/071133, le profil d'une section est à deux dimensions définissant quatre zones carrées 400 à 403 de longueurs $L$ égales et séparées par les axes 300 et 301. Chacune des zones 400 à 403 peut être pilotée par des électrodes distinctes.

Cette technique de l'art antérieur présente l'inconvénient de ne pas être optimisée pour le couplage aux modes d'ordres supérieurs. En outre, sa mise en oeuvre n'est pas non plus optimisée, en particulier pour des modes de réalisation adaptés à filtrer plusieurs longueurs d'ondes indépendamment.

L'une des variantes de réalisation présente une meilleure tolérance aux erreurs de positionnement en présence d'un défaut de positionnement par rapport à un faisceau incident. Néanmoins, cette variante n'est pas optimisée du point de vue du coefficient de couplage (perte de dynamique d'atténuation).

**3. Objectifs de l'invention**

L'invention selon ses différents aspects a notamment pour objectif de pallier ces inconvénients de l'art antérieur.

Plus précisément, un objectif de l'invention est de prévoir des filtres optiques optimaux pour le découplage dans une fibre optique monomode.

Un autre objectif de l'invention est de permettre des filtres relativement simples à mettre en oeuvre, notamment sous forme de barrettes ou de matrices, permettant, en particulier de réduire leur taille.

Encore un autre objectif de l'invention est de garantir une bonne tolérance au positionnement et donc de faciliter l'agencement optique.

Un objectif de l'invention est également de permettre une implantation de filtres optiques pouvant être basée sur des technologies diverses.

Dans ce but, l'invention propose un filtre spatial de phase apte à recevoir un faisceau optique incident pour le transmettre vers une fibre de sortie monomode, le filtre étant adapté à être positionné sensiblement perpendiculairement à la direction de propagation du faisceau et comprenant un profil de phase spatialement variable et étant adapté à exciter les modes évanescents de la fibre de sortie. Le filtre est remarquable en ce que son profil présente :

- un motif modulable avec une distribution de phase correspondant sensiblement à une combinaison d'au moins un quantile de loi normale sur au moins une dimension ;et
- un support de zone déphasante borné vis-à-vis du faisceau incident suivant la ou les dimensions.

En outre, le motif modulable suit une distribution de phase correspondant sensiblement à une combinaison d'au moins un quantile de loi normale sur cette ou ces dimensions. Ainsi, dans le cas d'une amplitude du signal A constante sur un support D (dans un plan (x,y)) et pouvant varier de 1 (en l'absence d'atténuation) à 0 (si l'atténuation est totale), la distribution de phase correspondant à un quantile de loi normale suit la relation suivante :

$$\iint_D \frac{e^{-\frac{x^2}{2}}}{\sqrt{2\pi}}dx . \frac{e^{-\frac{y^2}{2}}}{\sqrt{2\pi}}dy = \frac{1}{1+A}.$$

Selon une caractéristique particulière, le filtre spatial est remarquable en ce que le profil présente un motif modulable avec une distribution de phase correspondant sensiblement à un quartile d'ordre impair de loi normale sur une dimension perpendiculaire à la direction de propagation du faisceau incident.

Ainsi, le support de zone déphasante est borné :

- sur une dimension : l'empreinte du faisceau incident (ou de son col dans le cas d'un faisceau gaussien) couvre complètement le motif modulable suivant cette dimension ; ou
- sur deux dimensions : l'empreinte du faisceau incident (ou de son col dans le cas d'un faisceau gaussien) couvre complètement le motif modulable suivant les deux dimensions d'un plan perpendiculaire (plan transverse) à la direction de propagation du faisceau.

Un quartile impair de loi normale est défini selon l'une des relations suivantes :

$$\int_{-\infty}^{q} \frac{e^{-\frac{x^2}{2}}}{\sqrt{2\pi}}dx = \frac{1}{4} \qquad \text{(quartile d'ordre 1)}$$

ou

$$\int_{-\infty}^{q} \frac{e^{-\frac{x^2}{2}}}{\sqrt{2\pi}}dx = \frac{3}{4} \qquad \text{(quartile d'ordre 3)}$$

où $q$ représente le quantile. Ce dernier représente la limite (coordonnée en $x$ suivant la dimension bornée) de la partie modulable du filtre.

Selon une caractéristique particulière, le filtre spatial est remarquable en ce que sa distribution de phase correspond sensiblement au troisième quartile de loi normale sur la dimension.

Ces filtres à une dimension sont optimaux pour le découplage dans une fibre optique monomode. Parmi ces filtres, les quartiles impairs (notamment le troisième quartile) présentent des avantages décisifs du point de vue de la prise en compte de leur implantation technologique. Ils permettent notamment de réduire la taille de la zone active par rapport au col du faisceau gaussien.

Cette propriété est particulièrement intéressante lorsqu'on associe plusieurs filtres sous la forme de barrettes ou de matrices requises, notamment pour la réalisation de DCE (« Dynamic Channel Equalizer » ou « Egaliseur de canal dynamique ») ou de ROADM (« Reconfigurable Optical Add & Drop Multiplexer » ou « Multiplexeur à insertion-extraction optique reconfigurable ») puisque l'utilisation de quartile d'ordre 3 permet d'optimiser la zone entre chaque zone déphasante ou retardante sans perte de résolution ni contrainte supplémentaire de bande passante.

L'utilisation de quartile d'ordre 3 est également particulièrement intéressante lorsque les moyens de déphasage comprennent des éléments de modulation électro-optiques (anisotropes (par exemple de type cristal liquide) ou isotropes (par exemple de type nano-PDLC), car elle permet d'optimiser l'aire de la zone active par rapport à l'aire du spot (correspondant au faisceau optique incident, la référence étant prise à l'aire couverte par le col du faisceau). Cela permet notamment de limiter les effets de champs transverses dus aux pixels voisins.

En outre, l'utilisation du troisième quartile dans un système comprenant plusieurs filtres permet une passivation optique plus facile de la zone intermédiaire (comprenant, par exemple, une résine photosensible, du verre, du silicium ou tout autre élément susceptible d'être gravé et présentant un retard fixe par rapport à une zone centrale du système modulable (notamment grâce à un élément électro-optique ou électromécanique)). Ainsi, on obtient des transitions de phase plus raides qu'au moyen d'une barrette (SLM) continûment modulable.

De plus, l'utilisation du troisième quartile permet une isolation électrique plus facile de la zone intermédiaire séparant deux zones actives correspondant à deux filtres et ainsi une réduction des effets de champs transverses dans le cas ou le matériau déphasant est électro-optique.

On note que le matériau séparant deux filtres distincts peut être à la fois un isolant électrique et un passivant optique.

Selon une caractéristique particulière, le filtre spatial est remarquable en ce que la combinaison est une somme d'au moins une différence de deux quantiles de loi normale sur une dimension perpendiculaire à la direction de propagation du faisceau incident, la somme étant égale à 1/4 ou 3/4.

On optimise ainsi le filtre.

Selon une caractéristique particulière, le filtre spatial est remarquable en ce qu'il est à symétrie axiale.

Ainsi, on obtient une meilleure tolérance aux défauts de positionnement du filtre vis-à-vis du faisceau incident.

Selon une caractéristique particulière, le filtre spatial est remarquable en ce que le profil présente :

- un motif modulable avec une distribution de phase correspondant sensiblement à une combinaison d'au moins un quantile de loi normale sur les deux dimensions d'un plan transverse vis-à-vis du faisceau incident ;et
- un support de zone active borné vis-à-vis du faisceau incident suivant les deux dimensions.

Ainsi, on obtient des filtres particulièrement intéressants à mettre en oeuvre sous forme de matrice de plusieurs filtres.

Selon une caractéristique particulière, le filtre spatial est remarquable en ce que la combinaison appartient au groupe comprenant :

- un quantile de loi normale ; et
- une différence de deux quantiles distincts de loi normale.

Selon une caractéristique particulière, le filtre spatial est remarquable en ce qu'il est à symétrie ponctuelle.

Ainsi, on obtient également une meilleure tolérance aux défauts de positionnement du filtre vis-à-vis du faisceau incident.

Dans le cas de mise en oeuvre sous forme de matrice de filtres élémentaires, la taille de la matrice est optimisée lorsque les filtres élémentaires sont carrés ou en forme de disque (espace entre filtres élémentaires réduit).

Selon une caractéristique particulière, le filtre spatial est remarquable en ce qu'une première partie du profil est carrée ou rectangulaire sur la ou les dimensions.

Un filtre à profil carré ou rectangulaire sur au moins une partie (par exemple binaire ou à plus de deux valeurs) est relativement simple à mettre en oeuvre si les moyens de déphasage sont adaptés (cas notamment de moyens de déphasage électro-optiques).

Selon une caractéristique particulière, le filtre spatial est remarquable en ce que le déphasage sur la première partie du profil est égal à $\pi$.

Ainsi, les modes évanescents de la fibre de sortie sont excités lorsque le filtre est activé permettant ainsi d'atténuer ou de bloquer le faisceau optique.

Selon une caractéristique particulière, le filtre spatial est remarquable en ce qu'une deuxième partie du profil est parabolique sur la ou les dimensions.

Le profil est ainsi complètement parabolique ou en partie parabolique (une autre partie pouvant alors être notamment linéaire).

Le filtre à profil parabolique est particulièrement bien adapté à un filtre à moyens de déphasage basés sur l'utilisation de miroirs électromécaniques à membrane dont la déformation est elle-même parabolique.

Selon une caractéristique particulière, le filtre spatial est remarquable en ce qu'une troisième partie du profil est triangulaire sur la ou les dimensions.

Le profil est ainsi complètement triangulaire ou en partie triangulaire (une autre partie pouvant alors être notamment parabolique ou rectangulaire).

Afin de minimiser la dimension de la zone active du filtre à profil respectivement parabolique et triangulaire, le déphasage maximal correspondant sera préférentiellement choisi sensiblement égal à respectivement à $3\pi/2$ et $8\pi/5$.

Selon une caractéristique particulière, le filtre spatial est remarquable en ce qu'il comprend des moyens de commande de l'atténuation variable sur une partie du profil.

Selon une caractéristique particulière, le filtre spatial est remarquable en ce que les moyens comprennent au moins un élément de modulation électro-optique ou électro-mécanique commandable.

L'invention concerne également un système apte à recevoir au moins un faisceau optique et comprenant au moins un filtre tel que décrit précédemment et plus précisément un filtre spatial de phase apte à recevoir un faisceau optique incident pour le transmettre vers une fibre de sortie monomode, le filtre étant adapté à être positionné sensiblement perpendiculairement à la direction de propagation du faisceau et comprenant un profil de phase spatialement variable et étant adapté à exciter les modes évanescents de la fibre de sortie., le profil du filtre présentant :

- un motif modulable avec une distribution de phase correspondant sensiblement à une combinaison d'au moins un quantile de loi normale sur au moins une dimension ;et
- un support de zone déphasante borné vis-à-vis du faisceau incident suivant la ou les dimensions.

Selon une caractéristique particulière, le système est remarquable en ce qu'il comprend au moins deux des filtres.

Ainsi, les filtres optimisant à la fois le couplage aux modes d'ordres supérieurs et l'implantation technologique, sont particulièrement bien adaptés à une mise en oeuvre, par exemple, sous la forme de barrettes ou de matrices de plusieurs filtres.

Selon une caractéristique particulière, le système est remarquable en ce que chacun des filtres comprend une zone modulante commandée électriquement.

Ainsi, le système peut être mis en oeuvre sous la forme d'un composant particulièrement compact.

Selon une caractéristique particulière, le système est remarquable en ce qu'il comprend des moyens d'imagerie, au moins un des filtres étant positionné dans un plan d'imagerie des moyens d'imagerie.

Le système ainsi formé avec, par exemple, des lentilles ou des moyens équivalents peut comprendre plusieurs plans d'imagerie. Des éléments optiques adaptés à réaliser une fonction propre au système (notamment multiplexage en longueur d'onde, démultiplexage, amplification,...) peuvent être avantageusement introduits dans les plans focaux des lentilles des moyens d'imagerie.

Selon une caractéristique particulière, le système est remarquable en ce qu'il comprend des moyens de démultiplexage en longueur d'onde du ou des faisceaux optiques pour former des faisceaux optiques démultiplexés destinés à être filtrés par les filtres.

Un tel système peut être réalisé à base de moyens de multiplexage/démultiplexage par exemple de type prisme associé à des fibres ou des moyens d'imagerie ou encore de type phasars suivant le principe d'un AWG (de l'anglais « Arrayed Wave Guide » ou « Réseaux de Guides d'ondes »).

Selon une caractéristique particulière, le système est remarquable en ce qu'il comprend des moyens de blocage sélectif d'au moins certaines longueurs d'onde du ou des faisceaux optiques.

Selon une caractéristique particulière, le système est remarquable en ce qu'il comprend des moyens de routage du faisceau optique.

Ainsi, les systèmes de filtres selon l'invention sont appropriés à l'implantation de fonctions de routage spatial et en longueur d'onde notamment du type DCE et ROADM.

L'invention concerne en outre un procédé de calcul d'un filtre tel que décrit précédemment, le procédé comprenant :

- une étape de détermination d'un coefficient de couplage du filtre en fonction d'un profil de phase, d'un maximum de phase et d'un support du filtre ;
- une étape de minimisation du coefficient de couplage ; et
- une étape de détermination du support correspondant sensiblement à un coefficient de couplage minimal.

Ainsi, il est possible de réaliser des filtres optimisés pour, exemple, que la distribution de phase corresponde sensiblement à un quartile impair de loi normale pour une dimension ou à une combinaison de quantiles de loi normale pour deux dimensions.

Les avantages du système et du procédé sont les mêmes que ceux du filtre, ils ne sont pas détaillés plus amplement.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- les figures 1a à 1d présentent un synoptique de système de filtrage optique conforme à l'invention selon différents modes particuliers de réalisation ;
- les figures 2a et 2b illustrent des systèmes de filtrage comprenant une barrette de filtres optiques tels que décrits en regard de la figure 1a;
- les figures 3a , 4a, 6a et 6b illustrent des filtres connus en soi ;
- les figures 3b à 3d présentent des filtres à quantiles à une dimension mis en oeuvre dans les systèmes des figures 1a à 1d selon des variantes de réalisation de l'invention ;
- les figures 4b à 4d illustrent des filtres à quantiles à deux dimensions mis en oeuvre dans les systèmes des figures 1a à 1d selon des variantes de réalisation de l'invention ;
- la figure 5 représente des courbes de tolérance sur la position du pixel dans les systèmes des figures 1a à 1d ;
- les figures 6a à 6d décrivent schématiquement la taille et la position d'un spot de lumière par rapport aux pixels dans les filtres des figures 1a à 1d ;
- les figures 7a à 7f illustrent une passivation de filtres présentés en regard des figures 1a à 1d ;
- les figures 8a à 8d présentent des profils paraboliques radiaux ou trapézoïdaux de filtres à une dimension tels qu'illustrés dans les figures 1a à 1d ; et
- la figure 9 décrit une structure d'un égaliseur à base d'AWG mettant en oeuvre des filtres selon l'invention.

## 5. Description détaillée de l'invention.

Le principe général de l'invention repose sur une catégorie de filtres permettant un découplage optimal de l'énergie injectée dans une fibre optique monomode.

Parmi ces filtres, une catégorie de filtres à symétrie axiale ou ponctuelle présente l'avantage d'offrir une meilleure tolérance d'alignement et dont certains, que l'on détaillera, sont plus faciles à implanter et bien adaptés à la réalisation de DCE et de ROADM.

Pour la réalisation de barrettes ou de matrice de filtres, on sélectionne préférentiellement un type de filtre qui présente en outre l'avantage d'optimiser l'espace inter pixel bien approprié à l'implantation sous forme de modulateur spatiaux de lumière (SLM) dans le contexte de la réalisation d'un DCE. Différentes réalisations techniques sont possibles en fonction de choix technologiques associés aux moyens d'atténuation optique (électro-optiques ou électro-mécaniques) ou aux moyens de transmission du faisceau lumineux (fibres accolées aux filtres, moyens de focalisation, multiplexeurs ou démultiplexeur, moyens de routages, d'amplification, ...).

Les filtres sont considérés comme minces et n'introduisent préférentiellement aucune déformation du faisceau gaussien autres que le déphasage (notamment pas de courbure de champ, pas d'élargissement du col).

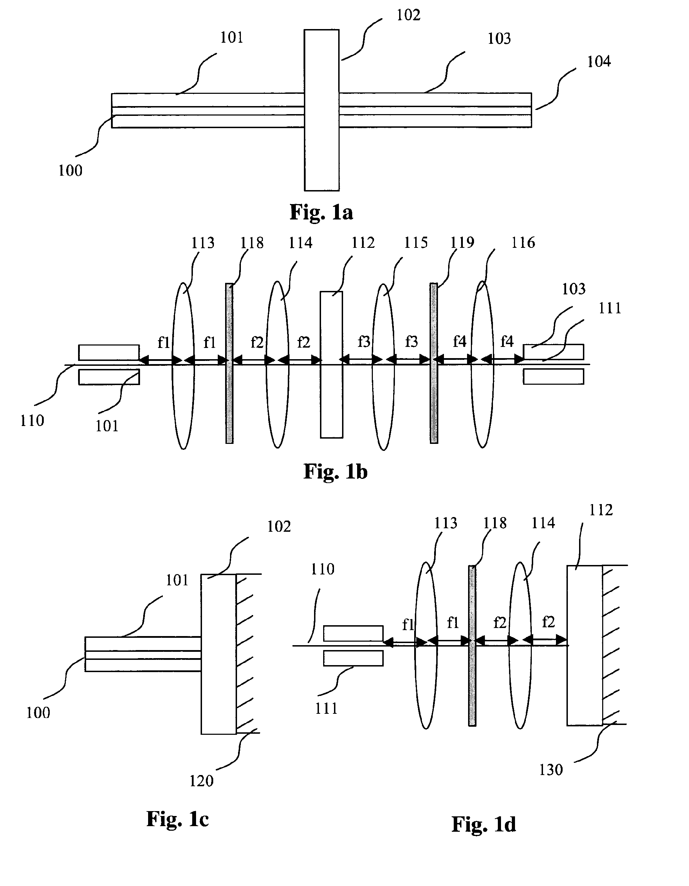

Les **figures 1a à 1d** présentent différents modes de réalisation selon l'invention.

Plus précisément, la **figure 1a** illustre un filtre 102 ou modulateur spatial de lumière, selon l'invention, placé entre deux fibres optiques monomodes 101 et 103 permettant respectivement la propagation d'un faisceau incident 100 et d'un faisceau de sortie 104. Selon l'invention, la zone active du filtre 102 est à support borné dans au moins une dimension, c'est-à-dire que la largeur du motif modulable correspondant est de taille strictement inférieure à celle d'un faisceau optique incident représenté par son col dans le cas d'un faisceau gaussien. Les fibres 101 et 103 sont accolées au filtre 102. Une ou plusieurs tensions de commande du filtre 102 permettent de déphaser plus ou moins fortement le faisceau incident 100 pour obtenir le faisceau de sortie 104, l'atténuation variable apparaissant lors du couplage du faisceau de sortie.

La **figure 1b** présente un DCE possédant une architecture similaire à celle du système de la figure 1a, le filtre 102 étant remplacé par une barrette de filtres 112, selon l'invention, et comportant, en outre, des systèmes d'imagerie avec multiplexeur ou démultiplexeur. Selon l'invention, la zone active de chaque filtre de la barrette 112 est à support borné dans au moins la dimension selon laquelle on réplique le motif, c'est-à-dire que le motif modulable correspondant a une largeur (prise dans la dimension où on réplique le motif) strictement inférieure à celle d'un faisceau optique incident représenté par son col dans le cas d'un faisceau gaussien. Plus précisément, le DCE comprend successivement :

EP 1 517 161 A1

- une fibre d'entrée 101 véhiculant un faisceau optique 110 ;
- un premier système d'imagerie adapté à créer une image démultiplexée spatialement du faisceau optique 110 (en fonction de ses longueurs d'ondes) sur le filtre 102 ;
- la barrette de filtres 112 ;
- un second système d'imagerie adapté à créer une image multiplexée à l'entrée d'une fibre de sortie 103 à partir de l'image du faisceau traversant la barrette de filtres 112 ; et
- la fibre de sortie 103 véhiculant un faisceau 111 égalisé par la barrette de filtres 112 en fonction des longueurs d'ondes du faisceau incident 110.

Selon une variante de l'invention, des moyens de collimation sont placés entre la fibre d'entrée 101 et le premier système d'imagerie et entre le second système d'imagerie et la fibre de sortie 103. Ces moyens de collimation sont préférentiellement accolés aux fibres respectivement d'entrée 101 et de sortie 103.
Le premier système d'imagerie comprend successivement:

- une lentille 113 de distance focale $f1$ située à la distance $f1$ de la sortie de la fibre 101 ;
- un démultiplexeur 118 (par exemple un prisme) adapté à démultiplexer spatialement le faisceau incident en fonction de sa ou de ses longueurs d'onde, et situé à la distance $f1$ de la lentille 113, le faisceau incident étant donc imagé sur le démultiplexeur 118 ;
- une lentille 114 de distance focale $f2$ située à la distance f2 du démultiplexeur 118 et de la barrette de filtres 112, le faisceau démultiplexé étant donc imagé (avec ses composantes spectrales séparées spatialement) sur la barrette 112.

Le second système d'imagerie comprend successivement:

- une lentille 115 de distance focale $f3$ située à la distance $f3$ de la barrette 112 ;
- un multiplexeur 119 (par exemple un prisme) adapté à multiplexer le faisceau incident égalisé par la barrette 112 en fonction de ses composantes spectrales, et situé à la distance $f3$ de la cette dernière ;
- une lentille 116 de distance focale $f4$ située à la distance $f4$ du multiplexeur 119 et de la fibre de sortie 103, le faisceau multiplexé et égalisé étant donc imagé sur la fibre de sortie 103.

Selon des variantes de réalisation du système illustré en regard de la figure 1b, des éléments optiques adaptés à réaliser une fonction propre au système (notamment un élément démultiplexeur de longueur d'onde) sont introduits dans les plans focaux des lentilles des systèmes d'imagerie (en remplacement ou en sus de multiplexeurs/démultiplexeurs 118 et 119).
Les **figures 1c et 1d** représentent des mises en oeuvre avec miroir des systèmes illustrés respectivement en regard des figures 1a et 1b. Les éléments communs portent les mêmes références et ne sont pas décrits davantage.
Selon la **figure 1c,** le système comprend un filtre 102 ou modulateur spatial de lumière, selon l'invention, placé entre une fibre optique 101 monomode et un miroir 120 accolé au filtre 102, la fibre 101 permettant respectivement la propagation d'un faisceau incident 100 et d'un faisceau de sortie 104 obtenu après filtrage sur le filtre 102 et réflexion sur le miroir 120.
Selon la **figure 1d,** l'égaliseur optique comprend successivement la fibre d'entrée/sortie 111 monomode, le premier système d'imagerie, la barrette de filtres 112 et un miroir 130 accolé à la barrette 112. Ainsi, la fibre 111, véhicule le faisceau incident 100 et le faisceau de sortie 104 obtenu après filtrage d'une image démultiplexée spatialement sur la barrette 112 et réflexion sur le miroir 130.

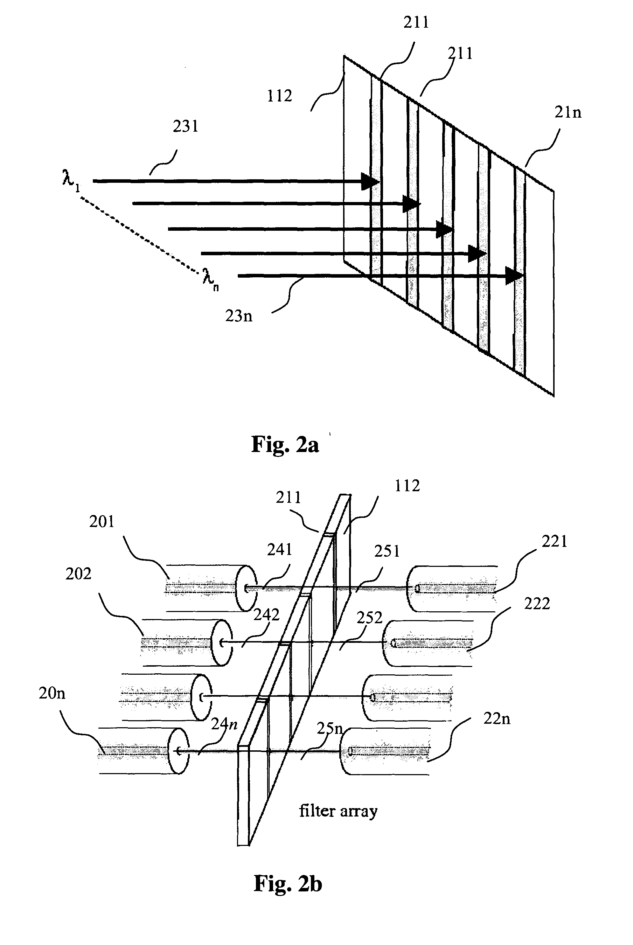

La **figure 2a** illustre le principe de fonctionnement des systèmes présentés en regard des figures 1b et 1d (les moyens de collimations n'étant pas représentés). Le faisceau incident possédant $n$ composantes spectrales de longueurs d'ondes respectives λ1 à λ$n$ est démultiplexé spatialement et une image démultiplexée spatialement est produite sur la barrette 112, comme indiqué schématiquement sur la figure 2a. La barrette 112 comprend $n$ filtres 211 à 21$n$ commandables (préférentiellement électriquement) de manière indépendante. Ainsi, la barrette 112 permet d'atténuer voire de bloquer les composantes spectrales du faisceau incident.
**La figure 2b** illustre un système mettant en oeuvre la barrette 112 de filtres 211 à 21$n$ et $n$ fibres d'entrée 201 à 20$n$, associées respectivement à $n$ fibres de sortie 221 à 22$n$. Selon cette variante de réalisation de l'invention, chacun des filtres 211 à 21$n$ est inséré entre une fibre d'entrée respectivement 201 à 20$n$ et une fibre de sortie 221 à 22$n$. Ainsi, le système de la figure 2b permet d'atténuer ou de bloquer indépendamment $n$ faisceaux d'entrée 241 à 24$n$ pour produire $n$ faisceaux de sortie 251 à 25$n$.
Des fondements théoriques permettant d'optimiser les profils d'atténuations des filtres selon l'invention sont présentés ci-après.
Le mode d'une fibre monomode est approché par le profil gaussien suivant :

7

$$e^{-\frac{x^2+y^2}{\omega_0^2}}$$

où :

- $\omega_0$ représente le col à l'origine (soit le rayon du faisceau gaussien pris à mi-hauteur de la distribution d'énergie du faisceau ; et
- x et y représentent les coordonnées spatiales (par rapport à une origine placée au centre de la fibre) selon deux axes perpendiculaires dans une section transversale de la fibre.

Si le déphasage $\Delta\varphi$ est binaire, le coefficient de couplage $\eta$ s'exprime sous la forme : $\eta = \alpha + \beta\cos\Delta\varphi$ où $\alpha$ et $\beta$ sont deux coefficients positifs dépendant du support du filtre. Pour minimiser le coefficient de couplage, $\Delta\varphi$ doit donc être égal à $\pi$.

Un filtre spatial (x,y) réalisant un découplage optimal (correspondant à un coefficient de couplage $\eta$ minimal) dans la fibre monomode correspond à un filtre dont le support de la fonction binaire de phase (avec déphasage $\Delta\varphi$ égal à $\pi$), D, vérifie la relation intégrale suivante (minimisant la différence $\alpha$ - $\beta$ dont dépend le coefficient de couplage $\eta$) :

$$\iint_D \frac{e^{-\frac{x^2}{2}}}{\sqrt{2\pi}}dx.\frac{e^{-\frac{y^2}{2}}}{\sqrt{2\pi}}dy = \frac{1}{2} \qquad \text{relation (1)}$$

Dans le cas d'une amplitude du signal A constante sur le support D et pouvant varier de 1 (en l'absence d'atténuation) à 0 (si l'atténuation est totale), la relation (1) est généralisable de la façon suivante :

$$\iint_D \frac{e^{-\frac{x^2}{2}}}{\sqrt{2\pi}}dx.\frac{e^{-\frac{y^2}{2}}}{\sqrt{2\pi}}dy = \frac{1}{1+A} \qquad \text{relation (2)}$$

La notion d'atténuation résiduelle a un intérêt dans le cas d'un composant électro-optique, par exemple, où le déphasage peut s'accompagner d'une absorption ou d'une diffusion résiduelle.

Parmi les filtres spatiaux vérifiant les relations (1) ou (2), on s'intéresse notamment, pour des raisons liées à leurs avantages pratiques, aux filtres présentant une symétrie axiale (cas à une dimension) ou ponctuelle (cas à deux dimensions) et à support borné sur la partie active du filtre (partie modulante).

Dans le cas où l'on peut considérer une dimension comme quasi infinie (soit très grande en pratique devant les autres dimensions), ce qui correspond, en particulier, au cas de la réalisation de filtres sous forme de barrette (par exemple la barrette 112 illustrée en regard des figures 1b, 1d, 2a et 2b), le critère selon la relation (1) devient (*Dx* représentant le support de la partie active du filtre suivant la direction *x* en supposant que le support *D* est infini suivant la direction *y*) :

$$\int_{Dx} \frac{e^{-\frac{x^2}{2}}}{\sqrt{2\pi}}dx = \frac{1}{2} \qquad \text{relation (3)}$$

La **figure 3a** illustrant un profil de filtre tel que décrit dans la demande de brevet WO 02/071133 possède un profil à support de partie active du filtre, infini dans un plan transverse (c'est-à-dire non borné vis-à-vis du faisceau incident, selon les deux dimensions d'un plan transverse). Aussi, il présente l'inconvénient de ne pas être optimisé, notamment en présence de défauts de positionnement d'un faisceau incident. Ce point est particulièrement critique dans le cas de l'utilisation sous forme d'une barrette ou d'une matrice de filtres.

Selon l'invention, les filtres 102 ou les filtres de la barrette 112 de dimension 1 sont de type quartiles impairs de loi normale définis selon l'une des relations suivantes :

$$\int_{-\infty}^{q} \frac{e^{-\frac{x^2}{2}}}{\sqrt{2\pi}} dx = \frac{1}{4} \qquad \text{relation (4)}$$

ou

$$\int_{-\infty}^{q} \frac{e^{-\frac{x^2}{2}}}{\sqrt{2\pi}} dx = \frac{3}{4} \qquad \text{relation (5),}$$

où $q$ représente le quantile. Dans le cas, par exemple, du premier ou du troisième quartile, il représente la limite (coordonnée en x) de la partie active du filtre.

Les caractéristiques mathématiques des quartiles impairs de loi normale sont présentés à la page 201 du livre "Calcul des probabilités" de A. Rényi édité chez Dunod en 1966 (dans le chapitre IV paragraphe 13 intitulé « Médiane et Quantiles »).

Les **figures 3b à 3d** présentent différents modes de réalisation du filtre 102 ou de filtres dans une barrette 112, ces filtres étant inverses (c'est-à-dire de phase binaire 0 ou π) et vérifiant l'une des relations (4) ou (5).

Plus précisément, la figure 3b correspond à un quartile vérifiant la relation (5) de troisième quartile avec une partie centrale 320 du filtre qui est à symétrie axiale suivant l'axe 300 et possède une largeur *L1* voisine de 3,0352 μm suivant un axe 301 perpendiculaire à l'axe 300. Un faisceau optique incident symbolisé par son empreinte 322 possède une section de rayon R sensiblement égal à 4,5 μm et est centré sur l'intersection des axes 300 et 301, la section étant dans un plan transverse défini par les axes 300 et 301.

En revanche, le filtre de la figure 3a, connu en soi, d'ordre 1/2 (filtre médian) vérifie la relation (3) mais n'est pas à support borné dans au moins une direction et ne peut donc pas vérifier les relations (4) ou (5).

Des supports bornés à deux dimensions sont aussi envisageables selon l'invention, ce qui est, notamment, particulièrement intéressant pour la réalisation de matrices de filtres.

Ainsi, des filtres à symétrie ponctuelle par rapport à support borné vérifie les relations (1) ou (2).

La figure 3c correspond à une combinaison de deux filtres quantiles non connexes et plus exactement à une différence de quantiles égale à 1/4 et vérifiant la relation :

$$\int_{-\infty}^{q2} \frac{e^{-\frac{x^2}{2}}}{\sqrt{2\pi}} dx - \int_{-\infty}^{q1} \frac{e^{-\frac{x^2}{2}}}{\sqrt{2\pi}} dx \quad = \quad \frac{1}{4} \qquad \text{relation (6)}$$

avec :

$$q1 = L2/2 \text{ et } q2 = q1 + L3.$$

L2 est voisin de 2 μm et représente la distance séparant les deux parties latérales 330 et 331 de largeur L3 (proche de 0,867 μm) du filtre illustré en figure 3c qui est à symétrie axiale suivant l'axe 300.

Comme précédemment, un faisceau optique incident possède une section de rayon R sensiblement égal à 4,5 μm et est centré sur l'intersection des axes 300 et 301, la section étant dans un plan transverse défini par les axes 300 et 301.

D'autres combinaisons de quantiles peuvent être mise en oeuvre selon l'invention, notamment les combinaisons de quantiles composées d'une somme de différences de quantiles. Dans le cas à une dimension chaque différence de quantile correspond à deux zones actives associées respectivement à deux bandes symétriques.

Pour chaque bande, chaque frontière est définie par un de ses deux quantiles. Il est donc nécessaire que les différences de quantiles associés à deux bandes distinctes ne se chevauchent pas.

Ainsi, une combinaison de (2n+2) quantiles de loi normale dans le cas général à une dimension s'écrit suivant la relation :

$$\sum_{i=0}^{n}\left(\int_{-\infty}^{q2i+2}\frac{e^{-\frac{x^2}{2}}}{\sqrt{2\pi}}dx - \int_{-\infty}^{q2i+1}\frac{e^{-\frac{x^2}{2}}}{\sqrt{2\pi}}dx\right) = \frac{1}{4} \text{ avec } qi < qj \text{ si } i < j \qquad \text{relation (7)}$$

Lorsque n vaut 0, on a une simple différence de quantiles de loi normale. Si en outre, q1 vaut 0, le deuxième terme de la différence vaut 1/2 et on se ramène au cas du troisième quartile à une dimension. Lorsque q1 vaut -∞, le deuxième terme de la différence vaut 0 et on obtient le premier quartile à une dimension.

On note que, selon l'invention, q2n+1 est tel que le support reste borné dans au moins une dimension vis-à-vis du faisceau optique incident.

La figure 3d illustre un filtre basé sur une combinaison de quantiles à une dimension, correspondant à trois sommes de différences de quantiles :

$$\sum_{i=0}^{2}\left(\int_{-\infty}^{q2i+2}\frac{e^{-\frac{x^2}{2}}}{\sqrt{2\pi}}dx - \int_{-\infty}^{q2i+1}\frac{e^{-\frac{x^2}{2}}}{\sqrt{2\pi}}dx\right) = \frac{1}{4} \text{ avec } q1 < q2 < q3 < q4 < q5 < q6$$

Chaque terme de la somme correspond à deux bandes symétriques par rapport à l'axe 300 (direction suivant laquelle le filtre n'est pas borné) : trois paires de bandes symétriques respectivement (340;343), (341;344) et (342;345) correspondent respectivement aux différences (q2-q1), (q4-q3) et (q6-q5). Suivant l'axe 301, les différentes bandes sont bornées vis-à-vis du faisceau incident. Dans le cas d'un faisceau gaussien, selon l'exemple de la figure 3d, le col du faisceau 322 couvre totalement les bandes 340 et 343 suivant l'axe 301 et en partie les bandes 341 et 344. Les bandes 342 et 345 qui sont en dehors de l'empreinte 322 sont également utiles puisque de l'énergie est présente en dehors du col du faisceau gaussien.

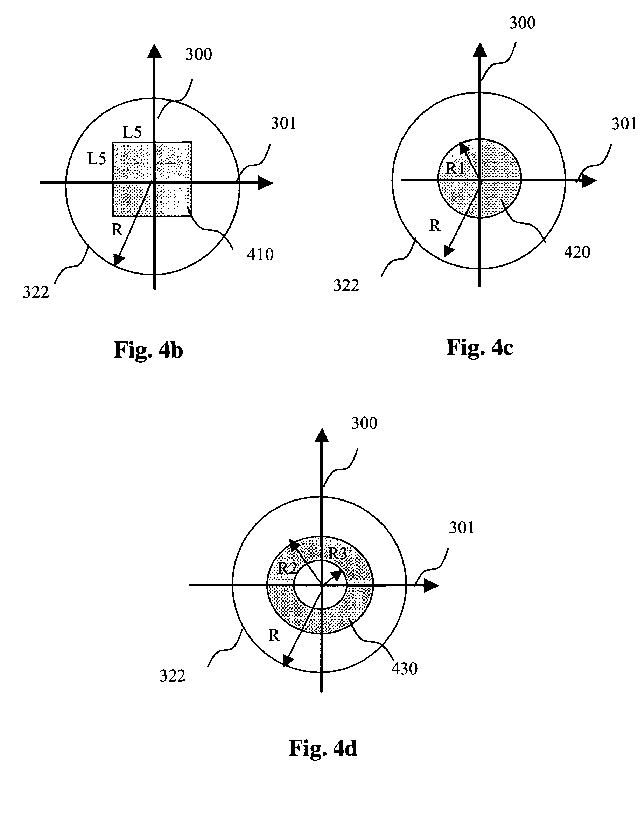

Les **figures 4b à 4d** présentent différents modes de réalisation du filtre 102 ou de filtres dans une barrette 112 vérifiant ces conditions (alors que le filtre de la figure 4a, connu en soi, obtenu par combinaison de deux médians orthogonaux vérifie la relation (2) est à symétrie ponctuelle mais n'est pas à support borné).

Cette notion de support borné est importante en pratique car une troncature du faisceau dans une dimension dans ce cas ne peut être compensée suivant l'autre dimension qui est infinie.

Dans une configuration de filtre à deux dimensions (sur un support borné), on considère généralement une représentation cartésienne ou radiale permettant de simplifier les calculs en les rapprochant du cas à une dimension.

Plus précisément, le filtre 410 de la **figure 4b** est à deux dimensions, respecte les conditions ci-dessus (support borné, symétrie ponctuelle et relation (2) vérifiée) et, en outre, est à symétrie axiale suivant deux axes 300 et 301 orthogonaux, formant ainsi un carré de coté L5 proche de 1,032 µm, qui correspond au plus petit filtre à motif modulable carré pour un faisceau optique incident possédant une section de rayon R sensiblement égal à 4,5 µm et centré sur l'intersection des axes 300 et 301. Dans ce cas, la relation (2) vérifiée par le filtre 410 devient:

$$\int_{-\infty}^{q3}\frac{e^{-\frac{x^2}{2}}}{\sqrt{2\pi}}dx.\int_{-\infty}^{q3}\frac{e^{-\frac{y^2}{2}}}{\sqrt{2\pi}}dy \quad = \quad \frac{1}{2} \qquad \text{relation (8)}$$

q3 est alors le quantile de loi normale d'ordre

$$\frac{1}{2} + \frac{1}{2\sqrt{2}}$$

ou d'ordre

$$\frac{1}{2} - \frac{1}{2\sqrt{2}}.$$

Le filtre 420 de la **figure 4c** a la forme d'un disque de rayon R1 proche de

$$\sqrt{\frac{\log 2}{2}} \ \mu m$$

(log2 représentant le logarithme népérien de 2) qui correspond au plus petit disque pour un faisceau optique incident possédant une section de rayon R sensiblement égal à 4,5 $\mu$m et centré sur l'intersection des axes de symétrie 300 et 301. Le filtre 420 satisfait à la relation (2) correspondant à un quantile de loi normale sur deux dimensions à support de zone active borné par rapport au faisceau incident (référence prise au col du faisceau).

Selon l'invention, une combinaison de quantiles correspondant à un filtre à une dimension est applicable également au cas à deux dimensions. Deux cas particuliers à deux dimensions peuvent être modélisés simplement avec des combinaisons:

- le cas à symétrie de révolution (cas du disque, de la couronne ou d'une succession de couronnes) (l'intégrale se calcule alors en coordonnées polaires) selon la relation :

$$\sum_{i=0}^{n}\left( \int_{-\infty}^{q2i+2}\int_{-\infty}^{q2i+2}\frac{e^{-\frac{x^2+y^2}{2}}}{\sqrt{2\pi}}dxdy \ - \ \int_{-\infty}^{q'2i+1}\int_{-\infty}^{q'2i+1}\frac{e^{-\frac{x^2+y^2}{2}}}{\sqrt{2\pi}}dxdy \right) \ = \ \frac{1}{2}$$

avec $qi < qj$ et $q'i < q'j$ si $i < j$ ;
et
- le cas du carré ou du rectangle (où on peut séparer l'intégrale double en deux intégrales simples correspondants au cas à une dimension) :

$$\sum_{i=0}^{n}\left( \int_{-\infty}^{q2i+2}\frac{e^{-\frac{x^2}{2}}}{\sqrt{2\pi}}dx \int_{-\infty}^{q2i+2}\frac{e^{-\frac{y^2}{2}}}{\sqrt{2\pi}}dy \ - \ \int_{-\infty}^{q'2i+1}\frac{e^{-\frac{x^2}{2}}}{\sqrt{2\pi}}dx \int_{-\infty}^{q'2i+1}\frac{e^{-\frac{y^2}{2}}}{\sqrt{2\pi}}dy \right) \ = \ \frac{1}{2}$$

avec $qi < qj$ et $q'i < q'j$ si $i < j$ ;

La **figure 4d** présente un filtre 430 à motif modulable en forme de couronne de rayon extérieur R3 proche de 2,48 μm et de rayon intérieur R2 de l'ordre de 1,1 μm adapté à filtrer un faisceau optique incident possédant une section de rayon R sensiblement égal à 4,5 μm et centré sur l'intersection des axes de symétrie 300 et 301. Le filtre 430 satisfait à la relation (2) et plus précisément correspond à une différence de quantiles radiaux à support borné respectivement D1 (de rayon R3) et D2 (de rayon R2) :

$$\iint_{D_1} \frac{e^{-\frac{x^2+y^2}{2}}}{\sqrt{2\pi}}\ dxdy - \iint_{D_2} \frac{e^{-\frac{x^2+y^2}{2}}}{\sqrt{2\pi}}\ dxdy = \frac{1}{2} \qquad\qquad \text{relation (9)}$$

Les filtres illustrés en regards des figures 3b, 3c et 4b à 4d sont définis pour un saut de phase binaire Δφ compris entre 0 et π. Selon des variantes de l'invention, afin de satisfaire certaines contraintes technologiques, la raideur du saut de phase est réduite et/ou des profils de phase plus complexes sont mis en oeuvre. Ils présentent l'avantage de relâcher la contrainte technologique de la raideur du filtre ou du saut de phase.
Dans le cas à une dimension, le principe du quartile selon les relations (4) et (5) reste valable et seule la valeur de la phase est modifiée.
Plus généralement, dans le cas de filtre à une ou deux dimensions à profil de phase variable quelconque, pour déterminer la géométrie du support optimal, on calcule d'abord le coefficient de couplage en fonction du profil de phase, d'une phase maximale et d'un support testé. Afin d'obtenir l'atténuation maximale, on cherche à annuler le coefficient de couplage et on peut ainsi choisir la phase maximale et le support optimal correspondant.
Afin d'optimiser le filtre, on applique, selon l'invention, le procédé de suivant :

- on détermine d'abord un coefficient de couplage η du filtre en fonction d'un profil de phase, d'un maximum de phase et d'un support du filtre ; puis
- on minimise ensuite le coefficient de couplage ; et
- on détermine le support correspondant sensiblement à un coefficient de couplage minimal.

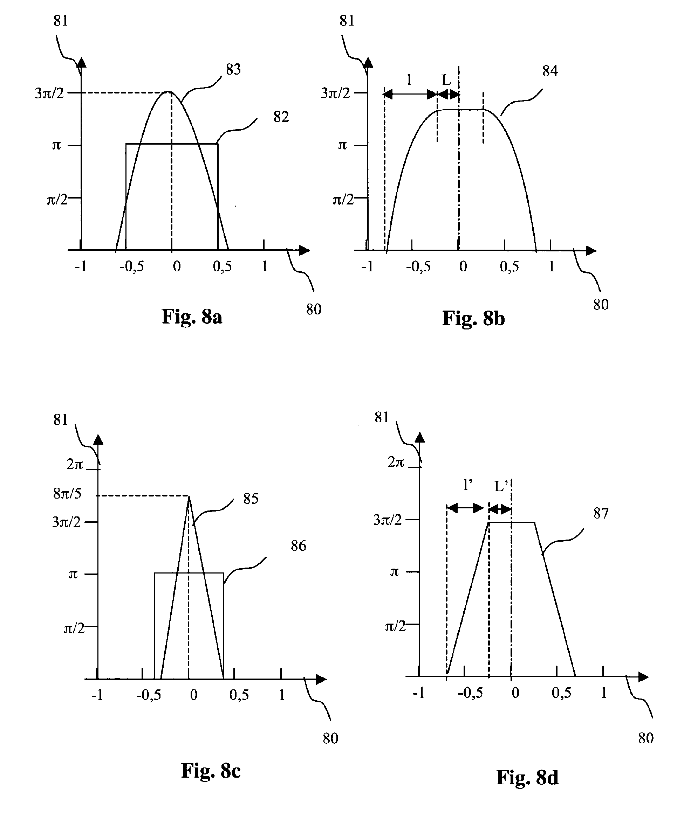

Les **figures 8a à 8d** illustrent ce principe dans deux cas simples (profil de phase parabolique ou triangulaire) qui présentent en outre un intérêt technologique car ils constituent une bonne approximation de cas réels.
Un profil de phase parabolique (notamment de type micro-lentille) correspond, par exemple, à un effet de champ transverse dans le cas d'un modulateur spatial électro-optique ou bien encore une déformation parabolique de la membrane d'un DMD tel que décrit dans l'article intitulé « Monolithic piezoelectric mirror for wavefront correction » (ou "miroir piezoélectrique monolithique pour une correction de front d'onde"en français) écrit par J. Feinleib, S. Lipson, P. Cone et paru dans Applied Physics Letters, Vol. 25, pages 311 à 313 en 1974.
Dans ce cas, la phase optimale n'est plus π et on peut obtenir une expression analytique de la valeur du quartile et du déphasage Δφ nécessaire en calculant le coefficient de couplage η qui peut s'écrire sous la forme :

$$\eta = A_\varphi(1 + B\sin(\Delta\varphi)) \qquad\qquad \text{Relation (10)}$$

La valeur du coefficient B, (B>0) dépend du dimensionnement du modulateur et peut être ramenée à 1, en résolvant l'équation suivante:

$$e^{-2X} = \frac{4}{3\pi}X \qquad\qquad \text{Relation (11)}$$

où X est le carré du rapport du rayon du support du filtre sur la largeur du col du faisceau gaussien et le plus petit déphasage annulant η est 3π/2 (correspondant à sin(Δφ) = -1).
La relation (10) s'écrit alors :

$$\eta = A_\varphi(1 + \sin(\Delta\varphi)).$$

A partir de cette relation, on optimise le filtre en déterminant le support correspondant sensiblement à un coefficient de couplage minimal.
La **figure 8a** illustre le principe de l'adaptation de la valeur du quartile dans le cas d'un profil binaire 82 ou parabolique de phase 83.

**La figure 8b** illustre une combinaison par morceaux de profils binaires et paraboliques , où *l* est le demi support parabolique et *L* le demi support binaire. La phase optimale varie alors en fonction du rapport *L/l* entre π (l = 0) et 3π/2 (L=0). Le plus petit support est obtenu pour *l* égal à 0 (cas binaire correspondant au profil 82).

Un profil de phase triangulaire (notamment de type micro-prisme) correspond, par exemple, à un défaut de gravure (effet d'ombrage) ou à une déformation d'un miroir par un micro-actuateur tel que décrit dans l'article de Feinleib cité plus haut.

Un effet de champ transverse peut également être grossièrement modélisé par ce cas. Le paramètre variable est la pente du prisme.

La **figure 8c** illustre la variation du quartile en fonction d'une modulation de phase du type triangle isocèle (biprisme). Dans ce cas, il existe un quartile optimisant le découplage et l'on montre que le plus petit déphasage annulant η est voisin de 8π/5. On note que le support est plus petit que le filtre binaire équivalent.

Une combinaison par morceaux de profils binaires et triangulaires selon la **figure 8d** est également considérée ; ce cas correspond aux profils trapézoïdaux qui constituent une bonne modélisation des effets de gravures et de déformation de la membrane d'un micro-miroir. La phase optimale varie alors en fonction du rapport *L'/l'* entre π (*l'* = 0) et 8π/5 (*L'*=0) (où *l'* est le demi support triangulaire et *L'* le demi support binaire). Le plus petit support est obtenu pour L' nul (correspondant à un bi-prisme).

Comme indiqué plus haut, les quartiles impairs de loi normale présentent l'avantage pour des filtres 102 ou des barrettes 112 de filtres tels que présentées en regard dispositif des **figures 2a et 2b**, d'une meilleure tolérance aux erreurs de positionnement. Ceci vient du fait que la dynamique est optimale lorsque l'aire du spot couvrant le pixel est la moitié de l'aire totale, le positionnement du spot sur le pixel est donc une étape très importante car la distribution d'énergie suit une loi gaussienne.

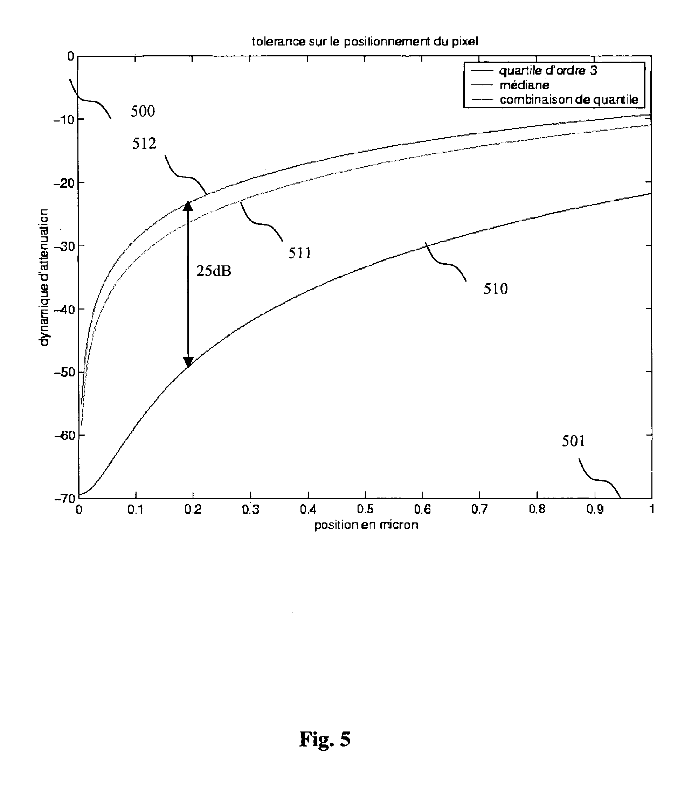

Ce point devient encore plus critique lorsqu'il s'agit d'aligner plusieurs spots sur une barrette de filtres comme requis dans le cas d'un DCE. La **figure 5** illustre l'impact de cette perturbation (erreur de positionnement par rapport à au centre du filtre, donné suivant l'abscisse 501 et exprimé en micron), en particulier sur la dynamique d'atténuation donné suivant l'axe des ordonnées 500 et exprimée en dB :

- sur un filtre médian connu en soi et basé sur le profil illustré en regard de la figure 3a, selon la courbe 512 ;
- sur un quartile d'ordre 3 (quartile impair) correspondant au profil illustré en regard de la figure 3b, selon la courbe 510 ; et
- sur une combinaison de quartiles correspondant au profil illustré en figure 3c, selon la courbe 511.

Le filtre correspondant au troisième quartile est le moins sensible au positionnement par rapport au spot. Ainsi, pour une erreur de positionnement du spot égale à 0,2 μm, la différence d'atténuation entres les courbes 512 (cas médian) et 510 (quartile impaire) est de l'ordre de 25 dB. Ce filtre à quartile impair présente également de nombreux autres avantages du point de vue de son implantation technologique.

Le paramètre de positionnement est plus critique, par exemple, qu'une erreur de focalisation dans le cas de l'utilisation de fibre monomode tel que détaillé dans l'article de V. Nourrit, J.L. de Bougrenet de la Tocnaye et P. Chanclou, intitulé «Propagation and diffraction of truncated Gaussian beam » (ou « propagation et diffraction d'un faisceau gaussien tronqué » en français) paru dans JOSA-A, Vol.18, pp. 546-554,2001.

Le filtre à quartile impair est donc particulièrement bien adapté à la réalisation d'un DCE.

Parmi les filtres à quartiles impairs, un filtre présente un avantage particulier, il s'agit du troisième quartile tel qu'illustré en **figure 3b**. Dans le cas d'une configuration impliquant une juxtaposition de pixels agissant sur chaque longueur d'onde ou sur un groupe de longueurs d'onde, comme c'est le cas dans un système où les longueurs d'onde sont démultiplexées spatialement selon la **figure 2a** ou séparées selon la **figure 2b**, et lorsque les canaux ou bandes spectrales sont bien établies (cas du bloqueur ou DCE), il est nécessaire d'optimiser l'intervalle entre chacun de ces filtres au regard de la bande passante par canal.

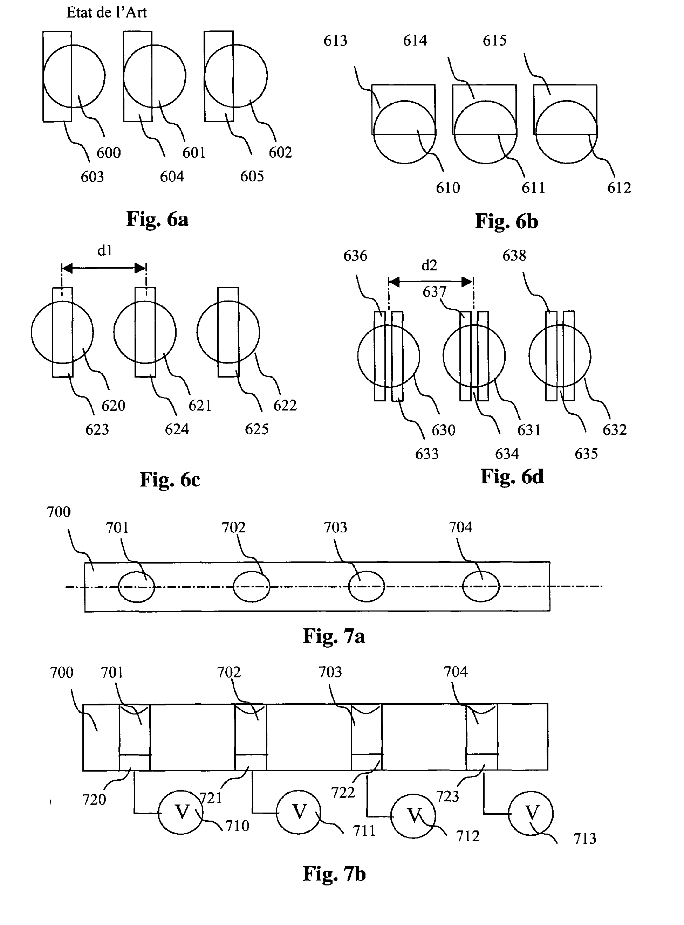

Les **figures 6c et 6d** représentent une barrette 112 avec filtres 623 à 625 de type respectivement troisième quartile ou combinaison de quantiles, dans une configuration optimisant la taille (respectivement *d*1 et *d*2) de l'intervalle entre deux zones actives (i.e. la zone à variation de phase ou de retard).

Si l'on veut obtenir le même résultat (dimension zone active / dimension du pixel total) avec le filtre médian de la figure 3a, il faut réduire la bande passante des 2/3 tel qu'illustré en regard des **figures 6a et 6b** selon deux configurations.

Le filtre 102 est donc le plus simple à réaliser technologiquement et est particulièrement bien adapté à une implantation sous forme de barrette 112 (il optimise la bande passante). Il est en outre le filtre binaire qui autorise la plus grande zone inter-pixel. On va voir maintenant l'intérêt de cette dernière propriété.

L'emploi d'un matériau, par exemple électro-optique, pour la modulation de phase ou électro-mécanique pour un retard variable des chemins optiques, peut introduire des contraintes supplémentaires sur le rapport entre la zone active et la dimension totale du pixel, liées au choix technologique des moyens de déphasage. Dans le cas d'une réalisation sous forme de barrette ou de matrice, il est très utile d'optimiser ce facteur de remplissage. On envisage ci-après deux types de moyens de déphasage :

- les moyens électro-mécaniques (par exemple micro-miroirs déformables de type MEMS, membrane déformable de type DMD ; et
- les modulateurs électro-optiques (notamment de type cristal liquide, nano-PDLC,...).

a) Cas des moyens électro-mécaniques (micro-miroirs (MEMS) ou membrane déformable (DMD)).

Chaque miroir ou membrane déformable est séparé par un ou plusieurs dispositifs d'activation (actuateur) ou de cantilever. Ces zones sont incontournables et sont de véritables zones mortes pour le modulateur en particulier sous forme matricielle. L'utilisation du troisième quartile selon un profil, par exemple à deux dimensions tel que décrit en regard des **figures 4b et 4c**, permet d'optimiser la zone morte, car ce quartile est le quartile binaire qui optimise le facteur de remplissage.

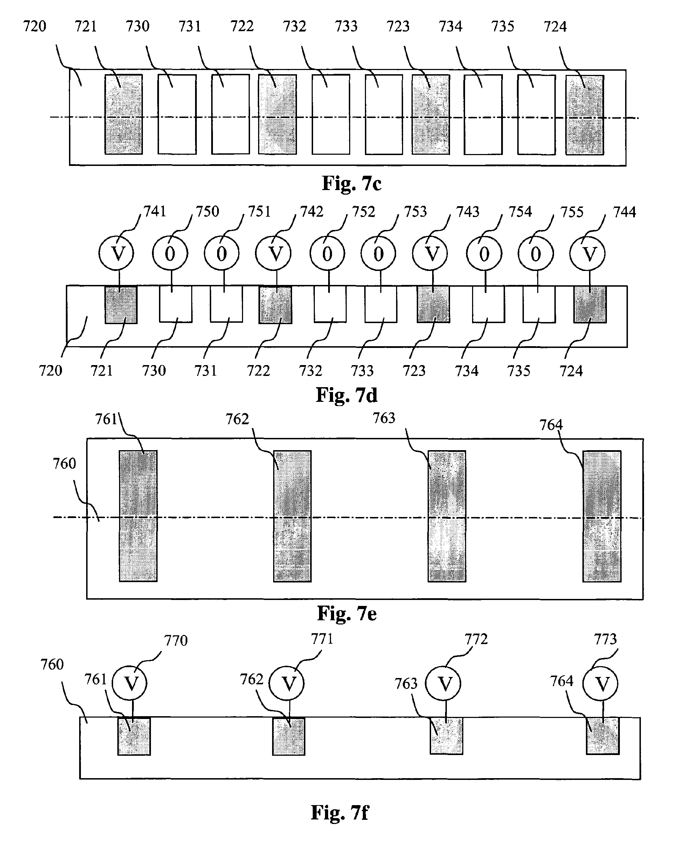

**Les figures 7a** et **7b** illustrent respectivement une vue de dessus et une vue en coupe d'une barrette 700 de filtres 701 à 704 conformes à l'invention selon un profil à deux dimensions tel qu'illustré en regard de la figure 4c. Selon différentes variantes de réalisation de l'invention, les filtres 701 à 704 sont d'un type quelconque conforme à l'invention tel qu'illustré notamment en regard des figures 3b, 3c et 4b à 4d. Les filtres 701 à 704 bien adaptés peuvent notamment être de géométrie quelconque (par exemple à symétrie radiale pour un DMD) ou implantés sous forme à une ou deux dimensions mettant en oeuvre, par exemple, des moyens de déphasage du type MEMS ou DMD. Les filtres 701 à 704 sont associés à des électrodes les pilotant par application d'une tension correspondante 710 à 713.

b) Cas d'un modulateur électro-optique.

Dans le cas d'un modulateur électro-optique (par exemple de type à cristal liquide ou à nano-PDLC commandé électriquement), deux configurations illustrées en regard des **figures 7c à 7f** sont possibles.

Selon une première configuration, le modulateur illustré en regard des **figures 7c** en vue de dessus et **7d** en coupe comprend des pixels 721 à 724 et 730 à 735 juxtaposés et régulièrement répartis. L'emploi du troisième quartile dans cette configuration revient à activer un pixel sur trois (pixels 721 à 724 activés par application d'une tension V via les moyens de commande respectifs 741 à 744 et pixels 730 à 735 désactivés par application d'une tension nulle via les moyens de commande respectifs 750 à 755). On peut limiter ainsi l'interaction électrique entre pixels voisins (effet de champ transverse plus ou moins sensible selon la technologie utilisée).

Une deuxième configuration illustrée en regard des **figures 7e** (vue de dessus) et **7f** (coupe) consiste à disposer la zone modulante comprenant des filtres 761 à 764 uniquement dans la zone centrale. L'utilisation du $3^{\text{ème}}$ quartile pour les filtres 761 à 64, qui optimise le rapport zone active zone morte rend plus facile cette opération technologique. Compte tenu de la dimension de l'intervalle, cette zone peut ainsi être utilisée pour passiver électriquement les zones actives à l'aide de source de tension 770 à 773. Selon une variante, la passivation est optique.

Cela présente l'intérêt supplémentaire de permettre des transitions de phase plus nettes entre deux niveaux de phase que dans la configuration précédente et de limiter encore plus l'interaction électrique entre pixels, et par conséquent les effets de champ transverse.

Dans ces deux cas, le troisième quartile est le filtre binaire le plus simple (en résolution et dessin) à implanter et qui offre le plus grand intervalle inter-pixel, facilitant ainsi à la fois les opérations de passivation inter-pixel et 1a limitation des effets de champ transverse.

Le principe du filtre binaire à quartile impair de loi normale peut être appliqué au cas d'une structure guidée à mode rectangulaire faiblement multi-mode. Le filtre est réalisé de manière différente et au moyen d'un élément électro-optique. Dans ce cas, l'application du champ ne s'effectue pas parallèlement à l'axe optique, mais perpendiculairement à celui-ci.

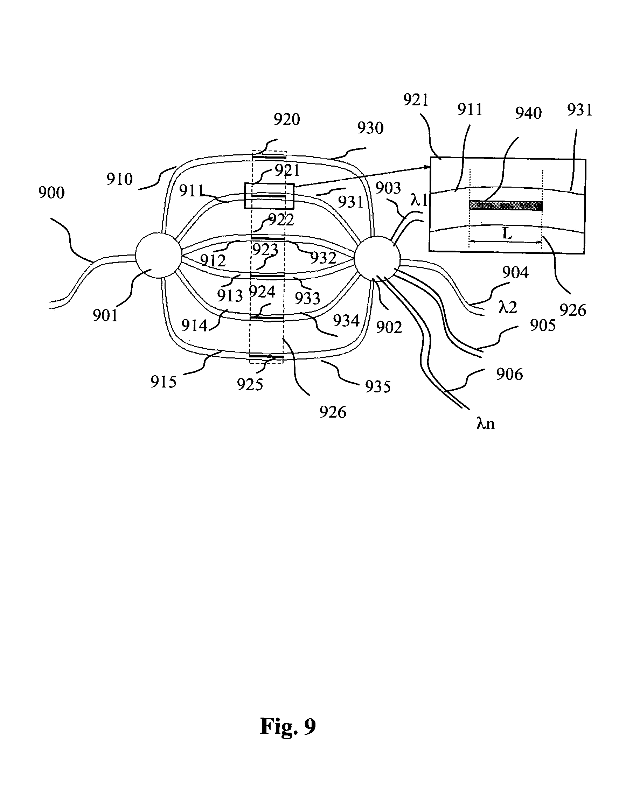

La **figure 9** illustre un AWG (de l'anglais « Arrayed Wave Guide » ou « Réseaux de Guides d'ondes ») qui comprend :

- un guide d'onde d'entrée 900 associé à une fibre d'entrée non représentée ;
- des phasars (lignes à retard sous forme de guides d'onde) 910 à 915 et 930 à 935 ;
- une lentille 901 (ou « star coupler » en anglais) interfaçant la fibre d'entrée 900 avec les phasars 910 à 915 ;
- des filtres déphaseurs 920 à 925 reliant respectivement les phasars 910 à 915 aux phasars 930 à 935 ;
- des guides d'onde de sortie 903 à 906 associés chacun à une longueur d'onde différente $\lambda i$ ($i$ compris entre 1 et $n$) et destinés chacun à émettre un faisceau de sortie vers une fibre de sortie ; et
- une lentille 902 reliant les phasars 930 à 935 aux guides 903 à 906.

Les filtres 920 et 925 sont similaires. A titre illustratif, le filtre 921 comprend une zone active 940 reliant les phasars 921 et 931. Dans ce mode de réalisation, la zone modulante est directement gravée dans le guide et le déphasage est obtenu par application d'un champ électrique perpendiculairement au guide. La valeur de ce déphasage est déterminée, notamment, par la longueur de la zone active *L*. La structure guidée est donc bien adaptée à l'implantation du troisième quartile car elle garantit des déphasages binaires.

La configuration AWG est équivalente à un montage dit 4f en espace libre, tel qu'illustré en regard de la figure 1b, avec plan de Fourier au centre du montage.

L'intérêt principal de cette solution est de pouvoir réaliser par ce moyen un égaliseur ou sélecteur de bande spectrale en utilisant une configuration de démultiplexage du type AWG comme indiquée dans l'article de M.C. Parker, A.D. Cohen, R.J Mears, intitulé « Dynamic digital holographic wavelength filtering » (ou « filtrage dynamique, numérique et holographique de longueur d'ondes » holographique et paru dans JLT Vol. 16, No. 7, pp. 1259-1270, en 1998).

Bien entendu, l'invention n'est pas limitée aux exemples de réalisation mentionnés ci-dessus.

En particulier, l'homme du métier pourra apporter toute variante dans la définition des filtres vérifiant les conditions précisées ci-avant, et notamment de quartiles impairs et de combinaison de quantiles à support borné.

On note que la mise en oeuvre des filtres ne se limite pas à une fonction d'atténuation mais s'étend à tout système avec une fibre monomode en sortie, en particulier égaliseur, atténuateurs, commutateurs, convertisseurs de mode,...

La mise en oeuvre de l'invention n'est pas limitée aux filtres dont les motifs modulables sont dans un même plan, mais s'étend également aux filtres dont les motifs à support bornés sur au moins une dimension (par rapport au faisceau incident) sont dans des plans distincts : ainsi, par exemple, les deux parties 330 et 331 du filtre illustré en regard de la figure 3 ne sont pas nécessairement dans le même plan mais peuvent être placés respectivement dans des plans décalés par rapport à la direction de propagation du faisceau incident. Plus généralement, un motif programmable de filtre peut être placé dans plusieurs plans perpendiculaires à l'axe de propagation du faisceau incident, la somme des empreintes (ou empreinte globale) des motifs modulables respectant les conditions de support borné par rapport au faisceau incident sur au moins une direction et correspondant à une combinaison de quantiles.

**Revendications**

1. Filtre spatial de phase (102, 112, 920) apte à recevoir un faisceau optique incident pour le transmettre vers une fibre de sortie monomode (104, 111, 221) ledit filtre étant adapté à être positionné sensiblement perpendiculairement à la direction de propagation dudit faisceau et comprenant un profil de phase spatialement variable et étant adapté à exciter les modes évanescents de ladite fibre de sortie,
   **caractérisé en ce que** ledit profil présente :

   - un motif modulable avec une distribution de phase correspondant sensiblement à une combinaison d'au moins un quantile de loi normale sur au moins une dimension (300, 301) ;et
   - un support de zone déphasante (320, 330, 331, 340 à 345) borné vis-à-vis dudit faisceau incident suivant ladite au moins une dimension.

2. Filtre spatial selon la revendication 1, **caractérisé en ce que** ledit profil présente un motif modulable avec une distribution de phase correspondant sensiblement à un quartile d'ordre impair de loi normale sur une dimension perpendiculaire à la direction de propagation dudit faisceau incident.

3. Filtre selon la revendication 2, **caractérisé en ce que** sa distribution de phase correspond sensiblement au troisième quartile de loi normale sur ladite dimension.

4. Filtre spatial selon l'une quelconque des revendications 1 à 3, **caractérisé en ce que** ladite combinaison est une somme d'au moins une différence de deux quantiles de loi normale sur une dimension perpendiculaire à la direction de propagation dudit faisceau incident, ladite somme étant égale à 1/4 ou 3/4.

5. Filtre spatial selon l'une quelconque des revendications 2 à 4, **caractérisé en ce qu'**il est à symétrie axiale.

6. Filtre spatial selon la revendication 1, **caractérisé en ce que** ledit profil présente :

   - un motif modulable avec une distribution de phase correspondant sensiblement à une combinaison d'au moins un quantile de loi normale sur les deux dimensions d'un plan transverse vis-à-vis dudit faisceau incident ;et
   - un support de zone active borné vis-à-vis dudit faisceau incident suivant lesdites dimensions.

**7.** Filtre spatial selon la revendication 6, **caractérisé en ce que** ladite combinaison appartient au groupe comprenant :

- un quantile de loi normale ; et
- une différence de deux quantiles distincts de loi normale.

**8.** Filtre spatial selon l'une quelconque des revendications 6 et 7, **caractérisé en ce qu'**il est à symétrie ponctuelle.

**9.** Filtre selon l'une quelconque des revendications 1 à 8, **caractérisé en ce qu'**une première partie dudit profil (82, 86, 87) est carrée ou rectangulaire sur ladite ou lesdites dimensions.

**10.** Filtre selon la revendication 9, **caractérisé en ce que** le déphasage sur ladite première partie dudit profil est égal à $\pi$.

**11.** Filtre selon l'une quelconque des revendications 1 à 10, **caractérisé en ce qu'**une deuxième partie dudit profil (83, 84) est parabolique sur ladite ou lesdites dimensions.

**12.** Filtre selon l'une quelconque des revendications 1 à 11, **caractérisé en ce qu'**une troisième partie dudit profil (85, 87) est triangulaire sur ladite ou lesdites dimensions.

**13.** Filtre selon l'une quelconque des revendications 1 à 12, **caractérisé en ce qu'**il comprend des moyens de commande de ladite atténuation variable sur une partie dudit profil.

**14.** Filtre selon la revendication 13, **caractérisé en ce que** lesdits moyens comprennent au moins un élément de modulation électro-optique ou électro-mécanique commandable.

**15.** Système (112) apte à recevoir au moins un faisceau optique et comprenant au moins un filtre (211 à 21n) selon l'une quelconque des revendications 1 à 14.

**16.** Système selon la revendication 15, **caractérisé en ce qu'**il comprend au moins deux desdits filtres.

**17.** Système selon la revendication 16, **caractérisé en ce que** chacun desdits filtres comprend une zone modulante commandée électriquement.

**18.** Système selon l'une quelconque des revendications 15 à 17, **caractérisé en ce qu'**il comprend des moyens d'imagerie, au moins un desdits filtres étant positionné dans un plan d'imagerie desdits moyens d'imagerie.

**19.** Système selon l'une quelconque des revendications 15 à 18, **caractérisé en ce qu'**il comprend des moyens de démultiplexage en longueur d'onde dudit ou desdits faisceaux optiques pour former des faisceaux optiques démultiplexés destinés à être filtrés par lesdits filtres.

**20.** Système selon l'une quelconque des revendications 15 à 19, **caractérisé en ce qu'**il comprend des moyens de blocage sélectif d'au moins certaines longueurs d'onde dudit ou desdits faisceaux optiques.

**21.** Système selon l'une quelconque des revendications 15 à 20, **caractérisé en ce qu'**il comprend des moyens de routage dudit faisceau optique.

**22.** Procédé de calcul d'un filtre selon l'une quelconque des revendications 1 à 14, **caractérisé en ce qu'**il comprend :

- une étape de détermination d'un coefficient de couplage dudit filtre en fonction d'un profil de phase, d'un maximum de phase et d'un support dudit filtre ;
- une étape de minimisation dudit coefficient de couplage ; et
- une étape de détermination dudit support correspondant sensiblement à un coefficient de couplage minimal.

**Fig. 1a**

**Fig. 1b**

**Fig. 1c**

**Fig. 1d**

211

211

112

21n

231

$\lambda_1$

$\lambda_n$

23n

**Fig. 2a**

112

211

201

241

251

221

202

242

252

222

20n

24$n$

25$n$

22n

filter array

**Fig. 2b**

300

L          L

Etat de l'Art

R

301

302

310

311

**Fig. 3a**

Etat de l'Art

403          300          401

400

L          L

R          L

302

402

L

**Fig. 4a**

300

320          322

R

301

L1

**Fig. 3b**

330          300

L3          322

L2          301

R

331

q1 q2

**Fig. 3c**

343          300          340

345          341

342          322

322          301

344          q1 q2 q3     q4 q5 q6

**Fig. 3d**

**Fig. 4b**

**Fig. 4c**

**Fig. 4d**

tolerance sur le positionnement du pixel

**Fig. 5**

Etat de l'Art

Fig. 6a

600
601
602

603
604
605

613
614
615

610
611
612

Fig. 6b

d1

620
621
622

623
624
625

Fig. 6c

636
638

d2
637

630
631
632

633
634
635

Fig. 6d

700
701
702
703
704

Fig. 7a

700
701
702
703
704

720
721
722
723

V
710

V
711

V
712

V
713

Fig. 7b

720 721 730 731 722 732 733 723 734 735 724

**Fig. 7c**

741 750 751 742 752 753 743 754 755 744

(V) (0) (0) (V) (0) (0) (V) (0) (0) (V)

720 721 730 731 722 732 733 723 734 735 724

**Fig. 7d**

761 762 763 764

760

**Fig. 7e**

770 771 772 773

760 761 (V) 762 (V) 763 (V) 764 (V)

**Fig. 7f**

Fig. 8a

Fig. 8b

Fig. 8c

Fig. 8d

**Fig. 9**

Office européen
des brevets

**RAPPORT DE RECHERCHE EUROPEENNE**

Numéro de la demande

EP 04 36 4060

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X,D<br>A | WO 02/071133 A (COHEN GIL ;XTELLUS INC (US)) 12 septembre 2002 (2002-09-12)<br>* page 15, alinéa 3 - page 16, alinéa 2 *<br>* page 17, alinéa 2 *<br>* page 20, alinéa 2 - page 21, alinéa 1 *<br>* figures 1,3B,11 * | 1-5,9,<br>10,13-18<br>22 | G02B5/20<br>G02B26/08<br>G02B6/26<br>G02F1/01<br>G02F1/1333 |
| X | US 2003/059155 A1 (RIZA NABEEL AGHA) 27 mars 2003 (2003-03-27)<br>* alinéas [0002], [0009], [0029], [0030] *<br>* figure 4B * | 1-5,9,<br>10,13-17 | |
| X | WO 98/27448 A (FOERSVARETS FORSKNINGSANSTALT ;ZYRA STAN (SE); GUSTAFSSON TORBJOER) 25 juin 1998 (1998-06-25)<br>* page 2, ligne 16-20 *<br>* page 3, ligne 15-22 *<br>* figure 3 * | 1,6-8,<br>10,13,14 | |
| X | B. WATTELLIER, C. SAUTERET: "application de lames de phase programmables à la mise en forme de taches focales" RAPPORT SCIENTIFIQUE 1999, juin 2000 (2000-06), pages 110-112, XP002311217 ECOLE POLYTECHNIQUE, PALAISEAU<br>* page 112, alinéa 4.1-4.2 *<br>* figures 6,7 * | 1,6-8 | DOMAINES TECHNIQUES RECHERCHES (Int.Cl.7)<br><br>G02B<br>G02F |
| A | US 5 745 271 A (MILLER DAVID ANDREW BARCLAY ET AL) 28 avril 1998 (1998-04-28)<br>* colonne 2, ligne 13-31 *<br>* colonne 4, ligne 7-62 *<br>* figure 1 * | 15,17-21 | |

-/--

Le présent rapport a été établi pour toutes les revendications

| Lieu de la recherche | Date d'achèvement de la recherche | Examinateur |
|---|---|---|
| Berlin | 20 décembre 2004 | Verdrager, V |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

Office européen
des brevets

**RAPPORT DE RECHERCHE EUROPEENNE**

Numéro de la demande

EP 04 36 4060

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 377 726 B1 (BRAUDE OFER ET AL) 23 avril 2002 (2002-04-23) * colonne 1, ligne 64 - colonne 2, ligne 6 * * colonne 4, ligne 27 - colonne 5, ligne 65 * * figures 3,5A,7A * | 1,6-8, 10,22 | |
| A | WO 03/034118 A (GLUECKSTAD JESPER ;RISOE NAT LAB (DK); SOERENSEN THORKILD (DK)) 24 avril 2003 (2003-04-24) * page 13, ligne 3-17 * * page 15, ligne 18-33 * * figure 15 * | 1,6,15 | |
| A | WO 03/009054 A (COREM YOSSI ;COHEN GIL (US); XTELLUS INC (US); SUH SEONGWOO (US)) 30 janvier 2003 (2003-01-30) * page 4, alinéa 2 - page 6, alinéa 4 * * page 15, alinéa 4 - page 16, alinéa 2 * * page 20, alinéa 2 * * figures 7,10 * | 1,6,15, 17,22 | |
| A | THORNBURG W Q ET AL: "Selective launching of higher-order modes into an optical fiber with an optical phase shifter" OPTICS LETTERS, OPTICAL SOCIETY OF AMERICA, WASHINGTON, US, vol. 19, no. 7, 1 avril 1994 (1994-04-01), pages 454-456, XP002213229 ISSN: 0146-9592 * page 454, colonne 2, alinéa 1 * * page 455, colonne 1, alinéa 1 * * figures 3-5 * | 1,15 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| Berlin | 20 décembre 2004 | Verdrager, V |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**                    EP 04 36 4060

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-12-2004

| Document brevet cité au rapport de recherche | | Date de publication | Membre(s) de la famille de brevet(s) | | Date de publication |
|---|---|---|---|---|---|
| WO 02071133 | A | 12-09-2002 | EP | 1371156 A2 | 17-12-2003 |
| | | | EP | 1370900 A2 | 17-12-2003 |
| | | | WO | 02071660 A2 | 12-09-2002 |
| | | | WO | 02071133 A2 | 12-09-2002 |
| | | | JP | 2004522188 T | 22-07-2004 |
| | | | JP | 2004528751 T | 16-09-2004 |
| | | | US | 2004126120 A1 | 01-07-2004 |
| | | | US | 2004120683 A1 | 24-06-2004 |
| US 2003059155 | A1 | 27-03-2003 | US | 6222954 B1 | 24-04-2001 |
| WO 9827448 | A | 25-06-1998 | SE | 508115 C2 | 31-08-1998 |
| | | | SE | 9604648 A | 19-06-1998 |
| | | | WO | 9827448 A1 | 25-06-1998 |
| US 5745271 | A | 28-04-1998 | AUCUN | | |
| US 6377726 | B1 | 23-04-2002 | AUCUN | | |
| WO 03034118 | A | 24-04-2003 | WO | 03034118 A1 | 24-04-2003 |
| | | | EP | 1438616 A1 | 21-07-2004 |
| WO 03009054 | A | 30-01-2003 | EP | 1410100 A2 | 21-04-2004 |
| | | | WO | 03009054 A2 | 30-01-2003 |

EPO FORM P0460

Pour tout renseignement concernant cette annexe : voir Journal Officiel de l'Office européen des brevets, No.12/82